# EUROPEAN PATENT SPECIFICATION

(11) **EP 4 616 923 B1**
(45) Date of publication and mention of the grant of the patent: **29.07.2026**
(21) Application number: 24186540.1
(22) Date of filing: 04.07.2024
(51) Int. Cl.: B01D 19/00, F24D 19/08

(54) **DEVICE FOR SEPARATING GASES FROM LIQUIDS**
VORRICHTUNG ZUR ABSCHEIDUNG VON GASEN AUS FLÜSSIGKEITEN
DISPOSITIF POUR SÉPARER DES GAZ DE LIQUIDES

(30) Priority: 11.03.2024 CN 202410275377; 11.03.2024 CN 202410278630
(43) Date of publication of application: 17.09.2025
(73) Proprietor: Zhan, Zheng, Taizhou, Zhejiang 317600 (CN)
(72) Inventor: Zhan, Zheng, Taizhou, Zhejiang 317600 (CN)
(74) Representative: Elzaburu S.L.P.

(56) References cited:
- WO-A1-2017/164745
- WO-A1-2017/191678
- CN-A- 102 773 172
- CN-A- 106 215 464
- GB-A- 557 169
- US-B2- 8 087 293

## Description

### Technical field

The present invention relates to the technical field of pipeline fittings, particularly to a device for separating gases from liquids.

### Background

In plumbing systems, hot water is conveyed through pipelines, carrying dissolved gases that can compromise safety and cause noise within the plumbing system. Therefore, it is essential to discharge excess gases. While conventional gas discharge valves installed in plumbing pipes are commonly used for this purpose, they often struggle to effectively separate gases from water, resulting in inherent limitations.

To address this, gas separation devices have been developed based on existing gas discharge valves. For example, a patent document (publication number: FR7012589) discloses a gas separator that achieves gas separation through an eccentrically offset inlet for tangentially introducing water flow, and an outlet positioned below the inlet. Such design creates a vortex in the water flow to utilize centrifugal force for gas separation, and subsequently discharges the separated gas through an automatic gas discharge valve. Similarly, another patent document (publication number: WO2023/218350A1) discloses another gas separator that achieves gas separation also through an eccentrically offset inlet for tangentially introducing water flow. However, these eccentrically tangential inlets cause liquids inside a housing to undergo uneven circumferential forces as they form a vortex, resulting in that gas gathering at the center of the vortex distorts, rather than converges in a straight line, due to the non-linear axial alignment of the vortex's rotational center, thereby significantly diminishing the centrifugal effect and leading to poor gas separation efficiency. Another device is shown in WO2017/191678A1.

To improve gas separation efficiency, one common method is to increase the number of gas separators and arrange them in series to maximize gas discharge, thereby ensuring the safety of plumbing pipelines; however, this approach comes with higher installation costs and increased space requirements. Alternatively, another method involves incorporating multiple inlets on a housing, yet this would complicate pipeline connections.

### Summary

An objective of one embodiment of the present invention is to provide a device for separating gases from liquids, to solve the technical problem of poor gas separation efficiency in existing separation devices.

The objective of the present invention can be achieved by the following technical solution.

One embodiment of a device for separating gas from liquid, comprises a housing; a gas discharge chamber located at an upper portion of the housing; a separation chamber provided with a gas discharge hole and located at a lower portion of the housing; a gas discharge component mounted on the gas discharge chamber; a liquid inlet interface pipe provided at an upper end of the separation chamber; a liquid outlet interface pipe provided at a lower end of the separation chamber; a central cylinder fixed in the separation chamber; and a blocking member located below the central cylinder, an annular liquid passage gap located between the blocking member and the separation chamber, the separation chamber and the gas discharge chamber are in communication through the central cylinder; wherein a plurality of helical blades are fixed between the housing and the central cylinder in a spiral arrangement along a up-and-down direction, and are spaced from one another to form a plurality of liquid passage channels each having an outlet, with the number of the liquid passage channels being equal to the number of the helical blades, each outlet of the liquid passage channels is located outside at a lower end of the central cylinder and the outlet are substantially evenly distributed along a circumference of the central cylinder, an upper surface of the blocking member is provided with a downwardly sunken concave cavity that faces and aligns with the central cylinder, an upper end of the blocking member has a baffle with the concave cavity; the central cylinder has a conical shape with an upper part and a lower part, the upper part of the central cylinder being smaller than the lower part of the central cylinder, while a side wall of the separation chamber is cylindrical.

Gas-containing liquid is introduced through the liquid inlet interface pipe into the separation chamber, where the gas-containing liquid is divided into multiple streams by the helical blades and spirals downward along the liquid passage channels between the central cylinder and the housing, generating tangential centrifugal forces during the spiral motion. Thanks to the design where the outlets of the liquid passage channels are located outside at the lower end of the central cylinder and are substantially evenly distributed along the circumference of the central cylinder, the multiple streams of liquid divided by the helical blades can spiral out from the outlets of the liquid passage channels in an approximately uniform manner, and then these spiraling streams of liquid merge back into a state of a unified vortex with even circumferential forces, creating a linearly aligned rotational center of the vortex along the axial direction, thereby allowing gases to converge in a linear manner at the center of the vortex and ascend into an inner cavity of the central cylinder and then enter the gas discharge chamber, where they are discharged through the gas discharge component. Further, thanks to the design where the upper surface of the blocking member is provided with the downwardly sunken concave cavity that faces and aligns with the central cylinder, when the vortex-state liquid encounters the blocking member before entering the liquid outlet interface pipe, a sidewall of the blocking member causes the vortex-state liquid to split into: peripheral liquid, which is located outside the blocking member, and cavity liquid, which is located inside the concave cavity of the blocking member. The peripheral liquid, which exhibits effective degassing due to high centrifugal forces, flows out through the liquid outlet interface pipe; meanwhile, the cavity liquid continues swirling inside the concave cavity of the blocking member, facilitating further gas extraction and ensuring thorough separation of gas from the liquid. Thus, the present separation device can effectively enhance the separation efficiency of gases from liquids.

This configuration results in a top-to-bottom gradually decreasing gap between the outer surface of the central cylinder and the sidewall of the separation chamber, in other words, the liquid passage channels have a top-to-bottom decreasing flow cross-sectional area, while the central cylinder has a bottom-to-top decreasing inner hole. As the liquid flows downward along the helical blades, due to the top-to-bottom decreasing flow cross-sectional area of the liquid passage channels, the liquid acquires an increased flow velocity. This allows the liquid exiting from the outlets of the liquid passage channels to possess greater centrifugal force, facilitating the separation of gases from the liquid and causing gases to converge linearly directly below the central cylinder, thereby enhancing gas separation efficiency. Moreover, considering that gas separated from the liquid in the above process are in form of bubbles, the bottom-to-top gradual narrowing of the inner hole of the central cylinder causes the inner surface of the central cylinder to contract and converge the bubbles as the bubbles rise, promoting collision of the bubbles and formation of larger bubbles. The larger bubbles can quickly ascend into the gas discharge chamber, improving the efficiency of gas discharge. Furthermore, the larger diameter at the lower part of the central cylinder expands the area for bubble convergence, preventing bubbles from escaping outside the central cylinder.

In one embodiment of the above device for separating gases from liquids, an inner surface of the upper part of the central cylinder is provided with a protruding annular stop ring. The stop ring includes a central hole through which gases pass into the gas discharge chamber, facilitating further collision of the bubbles and rapid passage of gases through the central hole.

In one embodiment of the above device for separating gases from liquids, lower ends of all the helical blades are flush with the lower end of the central cylinder. This arrangement allows gases escaping from the liquid passage channels to enter the central cylinder directly upon exiting the helical blades, ensuring prompt discharge of gases.

In one embodiment of the above device for separating gases from liquids, the liquid outlet interface pipe is located on a bottom wall of the separation chamber, the concave cavity has a flat bottom surface, an arc-shaped side surface, and a cylindrical protruding ring along a rim of an opening of the concave cavity, the liquid passage gap exists between the protruding ring and the side wall of the separation chamber, a lower surface of the blocking member is provided with a connecting tube capable of being inserted into the liquid outlet interface pipe, an upper end of the connecting tube extends out of the liquid outlet interface pipe and has a through hole.

In the concave cavity of the blocking member, gases separated are prevented from entering the liquid outlet interface pipe by the blocking effect of the blocking member, and the blocking effect is further reinforced by the stop ring. The flat bottom surface and the arc-shaped side surface of the concave cavity allows the liquid to continue spiraling inside the concave cavity and ensuring effective blocking of the separated gas. The liquid passage gap and the through hole ensure smooth flow of the degassed liquid out of the housing.

In one embodiment of the above device for separating gases from liquids, the liquid outlet interface pipe is located on the side wall at the lower end of the separation chamber, the concave cavity has a concave spherical bottom surface and a side surface that has a cylindrical lower section and a conical upper section, an upper edge of the blocking member is above an inner hole of the liquid outlet interface pipe, the liquid passage gap exists between the blocking member and the side wall of the separation chamber. Gases separated in the blocking member's concave cavity are prevented from entering the liquid outlet interface pipe along with the liquid flow. The concave spherical bottom surface and the cylindrical lower section and conical upper section of the side surface of the concave cavity facilitate continued swirling of the liquid inside the concave cavity and effective blocking of the separated gas. The liquid passage gap ensures smooth discharge of the degassed liquid from the housing.

In one embodiment of the above device for separating gases from liquids, an outer side surface at a lower end of the blocking member is provided with a fixed ring that is fixedly connected to the housing. This fixed ring facilitates the secure attachment of the blocking member to the housing, ensuring easy assembly.

In one embodiment of the above device for separating gases from liquids, outer side walls of the helical blades are close to or slightly gapped from a cavity wall of the separation chamber, while inner side walls of the helical blades are fixed to the central cylinder. This configuration ensures that the divided streams of the liquid within the liquid passage channels are separated from each other, ensuring that all the liquid utilizes the helical blades to rotate spirally and flow out of the liquid passage channels, thereby enhancing gas separation efficiency. The slight gap between the outer sidewalls of the helical blades and the cavity walls of the separation chamber facilitates the installation of the helical blades.

In one embodiment of the above device for separating gases from liquids, the liquid inlet interface pipe corresponds to an upper end of the central cylinder and is arranged along a radial direction of the central cylinder. The Radial arrangement of the liquid inlet interface pipe reduces uneven forces on the liquid at the upper end of the central cylinder, promoting uniform force distribution when the liquid merges into a unified whole after exiting the helical blades, and helping the separated gas to converge linearly below the central cylinder, thereby enhancing gas separation efficiency. Moreover, the radial arrangement of the liquid inlet interface pipe facilitates convenient installation of the housing within pipelines.

In one embodiment of the above device for separating gases from liquids, a safety valve is connected to a side wall of the gas discharge chamber.

In one embodiment of the above device for separating gases from liquids, the liquid outlet interface pipe is located at a center of a bottom of the separation chamber, the blocking member comprises a baffle and a guide tube fixed below the baffle, the guide tube is inserted into and engaged with the liquid outlet interface pipe, the guide tube has at least one liquid passage hole, the liquid outlet interface pipe has a limiting portion or is provided with a limiting member, when the guide tube moves downward to contact the limiting portion or the limiting member, a spacing distance exists between a lower surface of the baffle and a bottom surface of the separation chamber, and a passage area of the at least one liquid passage hole above the bottom surface of the separation chamber gradually decreases as the guide tube moves down, a spring is provided between the blocking member and the liquid outlet interface pipe.

In the separation chamber, the liquid flows out after passing through the baffle, the gap between the lower surface of the baffle and the bottom surface of the separation chamber, the liquid passage hole, as well as the inner hole of the liquid outlet interface pipe. When a large amount of gas mixes into the liquid, the pressure within the pipeline suddenly increases, thereby raising the pressure inside the separation chamber; thus, the baffle experiences downward pressure, causing the blocking member, including the baffle and guide tube, to move downward. The downward movement of the baffle not only maintains its central position to block gas but also increases the height of the vortex space, lengthening the path for the liquid to spiral, which facilitates further separation of more gas from the liquid. Meanwhile, the downward movement of the guide tube causes it to contact and press against the limiting portion or limiting member; at this point, the spacing distance between the lower surface of the baffle and the bottom surface of the separation chamber decreases but still maintains a certain spacing distance; an effective flow area of the liquid passage hole gradually decreases as the blocking member moves downward but yet does not reach zero, ensuring continuous communication between the separation chamber and the inner hole of the liquid outlet interface pipe, thereby allowing the liquid to continue flowing out through the blocking member and the liquid outlet interface pipe, in other words, after the downward movement of the baffle, the blocking member does not fully close the liquid outlet interface pipe, thereby reducing flow volume while allowing the liquid to exit at a controlled flow rate, maintaining the flow of the liquid for the ongoing vortex motion within the separation chamber to ensure continuing gas separation and discharge through the gas discharge chamber. When the amount of gas mixing into the liquid returns to a normal level, the spring causes the blocking member to move upward and reset, restoring the normal volumetric flow of the liquid. Therefore, the present device ensures effective degassing when a large amount of gas mixes into the liquid, reducing the likelihood of gas escaping through the liquid outlet interface pipe along with the liquid.

In one embodiment of the above device for separating gases from liquids, an outer side surface of the guide tube is provided with a shoulder, the limiting portion is located at an upper port of the liquid outlet interface pipe, or the limiting member is fixed at the upper port of the liquid outlet interface pipe, the shoulder is directly above the limiting portion or the limiting member, a plurality of the at least one liquid passage holes are provided both above and below the shoulder on the guide tube.

When there is no significant gas in the liquid, upon upward movement of the guide tube under the action of the spring, the shoulder is separated from the limiting portion or limiting member, so that liquid passage holes positioned above and below the shoulder are all open, allowing normal volumetric flow of the liquid through the liquid passage holes. When a large amount of gas mixes into the liquid, causing the blocking member to move downward, the shoulder contacts and presses against the limiting portion or limiting member, so that liquid passage holes positioned above the shoulder remains open and unblocked, while the liquid passage holes positioned below the shoulder gradually closes until fully blocked, and thus, the total effective flow area of all the liquid passage holes positioned at two different places gradually reduces but yet does not reach zero, allowing the liquid to enter the liquid outlet interface pipe only through the liquid passage hole positioned above the shoulder, ensuring that despite reduced volumetric flow, the liquid continues to flow through the blocking member at a controlled rate, maintaining the liquid flow necessary for the ongoing vortex motion within the separation chamber to separate gas effectively, thereby minimizing the likelihood of gas escaping through the liquid outlet interface pipe along with the liquid.

In one embodiment of the above device for separating gases from liquids, a lower surface of the shoulder is an inverted cone-shaped abutment surface, the limiting portion or the limiting member has an inverted cone-shaped limiting surface that corresponds to the abutment surface. The inverted cone shape of both the abutment surface and the limiting surface ensures radial and axial positioning upon their contact, preventing oscillation of the blocking member after downward movement, and maintaining the baffle's effectiveness in blocking separated gas at the vortex center.

In one embodiment of the above device for separating gases from liquids, the blocking member further comprises a guide rod fixed below the baffle, the guide tube is located on an outer side of the guide rod, a guide bracket is fixed in the liquid outlet interface pipe and located below the guide tube, the guide rod is inserted into and engaged with the guide bracket, the spring is sleeved onto the guide rod and is located inside the guide tube, an upper end of the spring abuts against the blocking member, a lower end of the spring abuts against the guide bracket.

The guide rod serves to guide and limit the spring, preventing lateral bulging of the spring during the spring's compression, and ensuring stable operation of the spring. Additionally, the guide rod and the guide bracket are fitted together to collaborate in guiding the upward and downward movements of the blocking member, ensuring precise directionality of the upward and downward movements of the blocking member.

In one embodiment of the above device for separating gases from liquids, the liquid outlet interface pipe is located at a center of a bottom of the separation chamber, the blocking member comprises a baffle and a guide rod fixed below the baffle, a guide bracket is provided on the liquid outlet interface pipe, the guide rod is inserted into and engaged with the guide bracket, the guide rod has a limiting portion, when the guide rod moves downward until the limiting portion contacts the guide bracket, a spacing distance exists between a lower surface of the baffle and a bottom surface of the separation chamber, a spring is sleeved onto the guide rod, an upper end of the spring abuts against the blocking member, a lower end of the spring abuts against the guide bracket.

In the separation chamber, the liquid flows out after passing through the baffle, the gap between the lower surface of the baffle and the bottom surface of the separation chamber, as well as the inner hole of the liquid outlet interface pipe. When a large amount of gas mixes into the liquid, the pressure within the pipeline suddenly increases, thereby raising the pressure inside the separation chamber; thus, the baffle experiences downward pressure, causing the blocking member, including the baffle and guide rod, to move downward. The downward movement of the baffle not only maintains its central position to block gas but also increases the height of the vortex space, lengthening the path for the liquid to spiral, which facilitates further separation of more gas from the liquid. Meanwhile, the downward movement of the guide rod causes the limiting portion to contact and press against the guide bracket; at this point, the spacing distance between the lower surface of the baffle and the bottom surface of the separation chamber decreases but still maintains a certain spacing distance, ensuring continuous communication between the separation chamber and the inner hole of the liquid outlet interface pipe, thereby allowing the liquid to continue flowing out through the blocking member and the liquid outlet interface pipe, in other words, after the downward movement of the baffle, the blocking member does not fully close the liquid outlet interface pipe, thereby reducing flow volume while allowing the liquid to exit at a controlled flow rate, maintaining the flow of the liquid for the ongoing vortex motion within the separation chamber to ensure continuing gas separation and discharge through the gas discharge chamber. When the amount of gas mixing into the liquid returns to a normal level, the spring causes the blocking member to move upward and reset, restoring the normal volumetric flow of the liquid. Therefore, the present device ensures effective degassing when a large amount of gas mixes into the liquid, reducing the likelihood of gas escaping through the liquid outlet interface pipe along with the liquid.

Compared to the prior art, the present invention has the following advantages:
1. When liquid swirls below the central cylinder, it experiences uniform force distribution, causing gas to gather in a straight line below the central cylinder, thereby enhancing gas separation efficiency.
2. The arrangement of multiple helical blades enables the liquid to quickly achieve a required centrifugal force, which can reduce an axial height of the helical blades and consequently minimize the overall height of the housing, thereby facilitating easy installation of the present device within plumbing systems.
3. The structure of the blocking member divides the liquid before it exits the liquid outlet interface pipe, so that the liquid is separated into peripheral liquid and cavity liquid by the blocking member, and the cavity liquid continues to swirl within the blocking member's concave cavity, enhancing gas separation efficiency.
4. The cone shape of the central cylinder enhances the flow velocity and centrifugal force of the liquid as it exits the liquid passage channels, thereby improving gas separation efficiency, and at the same time facilitating the gathering of gas for rapid discharge.
5. The radial arrangement of the liquid inlet interface pipe not only allows convenient installation of the present device within plumbing systems, but also ensures uniform force distribution on the liquid when the liquid swirling below the central cylinder, thereby improving gas separation efficiency.
6. The connection of a safety valve on the sidewall of the gas discharge chamber enhances the safety of plumbing systems.
   When a large amount of gas causes an increased pressure within pipelines, gas will be discharged through the gas discharge hole of the gas discharge chamber; additionally, the increased pressure can open the safety valve, promptly releasing the large amount of gas to prevent safety hazards associated with gas flow within the pipelines. Furthermore, if the gas discharge component malfunctions and fails to discharge gas properly, the gas still can be discharged through the safety valve, thereby enhancing safety during operation.
7. When a significant amount of gas mixes into the liquid, the downward movement of the blocking member reduces the volumetric flow of the liquid, without fully closing the liquid outlet interface pipe; this adjustment allows for increased height of the vortex space while maintaining the liquid's vortex motion, ensuring effective degassing and reducing the likelihood of gas escaping with the liquid through the liquid outlet interface pipe.

### Brief description of the drawings

FIG. 1 is a perspective view of Embodiment I of the present device.
FIG. 2 is a perspective view of Embodiment I of the present device, with the housing being partially cut away.
FIG. 3 is a cross-sectional view of Embodiment I of the present device.
FIG. 4 is a perspective view of an inverted spiral component in Embodiment I of the present device.
FIG. 5 is a perspective view of a blocking member in Embodiment I of the present device.
FIG. 6 is a cross-sectional view of Embodiment II of the present device.
FIG. 7 is a perspective view of Embodiment III of the present device, with a housing being partially cut away and a blocking member in a moved down position.
FIG. 8 is a partial cross-sectional view of an area where the blocking member is located in FIG. 7.
FIG. 9 is a partial cross-sectional view of the area depicted in FIG. 8, with the blocking member in a reset position, in Embodiment III of the present device.
FIG. 10 is a perspective view from a first angle after disassembly of the blocking member, a limiting member, and a guide bracket in Embodiment III of the present device.
FIG. 11 is a perspective view from a second angle after disassembly of the blocking member, the limiting member, and the guide bracket in Embodiment III of the present device.
FIG. 12 is a partial cross-sectional view of Embodiment IV of the present device, with a blocking member in a downwardly moved position.
FIG. 13 is a partial cross-sectional view of Embodiment V of the present device, with a blocking member in a downwardly moved position.
FIG. 14 is a partial cross-sectional view of Embodiment V of the present device, with the blocking member in a reset position.

### Detailed description

Set forth below are specific embodiments of the present invention and a further description of the technical solutions of the present invention in conjunction with the accompanying drawings, but the present invention is not limited to these embodiments.

### Embodiment I

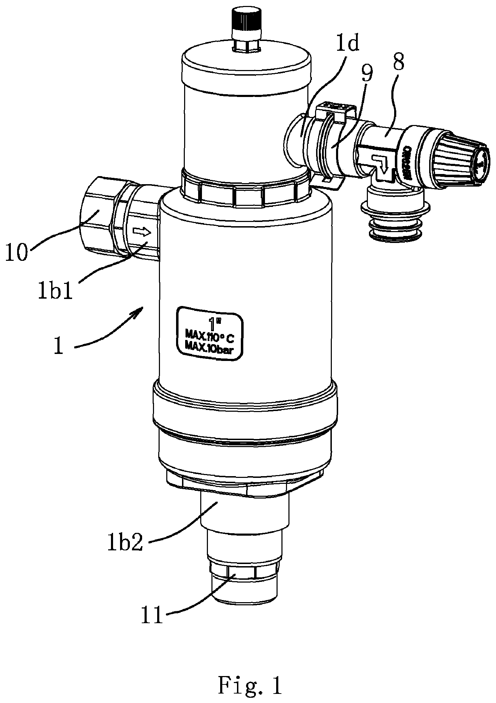

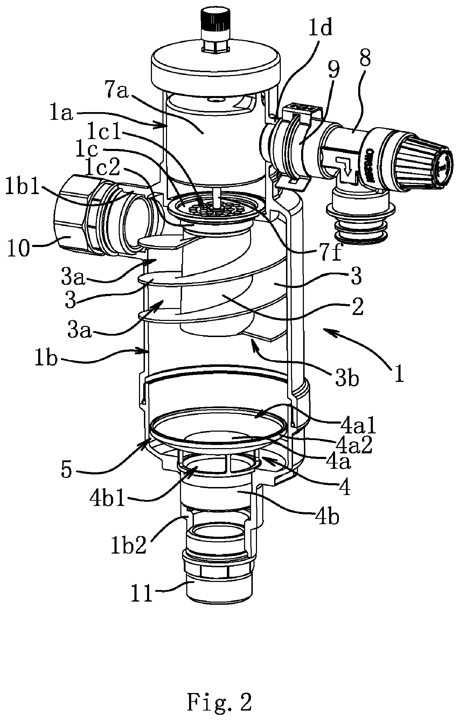

As shown in FIGS. 1 and 2, a device for separating gases from liquids comprises a housing 1. An upper part of the housing 1 has a gas discharge chamber 1a, and a lower part of the housing 1 has a separation chamber 1b. The side walls of both the gas discharge chamber 1a and the separation chamber 1b are in a cylindrical shape. A partition 1c is positioned between the gas discharge chamber 1a and the separation chamber 1b, with several gas passage holes 1c1 provided on the partition 1c. A gas discharge component 7 is installed on the gas discharge chamber 1a. The gas discharge component 7, together with a cavity wall of the gas discharge chamber 1a, form a gas discharge valve. A safety valve 8 is connected to the side wall of the gas discharge chamber 1a. On the side wall of the gas discharge chamber 1a, there is a safety interface pipe 1d, connected to which is a safety fitting 12. An inlet end of the safety valve 8 is quick-release coupled with the safety fitting 12 via a snap ring 9, while an outlet end of the safety valve 8 faces downward. At an upper end of the separation chamber 1b, there is a liquid inlet interface pipe 1b1 communicating with the separation chamber 1b, and at a lower end of the separation chamber 1b, there is a liquid outlet interface pipe 1b2 also communicating with the separation chamber 1b. The liquid inlet interface pipe 1b1 is radially oriented, whereas the liquid outlet interface pipe 1b2 is axially oriented. A liquid inlet fitting 10 is connected with the liquid inlet interface pipe 1b1, and a liquid outlet fitting 11 is connected with the liquid outlet interface pipe 1b2, the present device is connected to a pipeline by liquid inlet fitting 10 and the liquid outlet fitting 11, and facilitating connection of the present device to the pipeline. For ease of assembly, the housing 1 is constructed by connecting an upper cover, a middle main body, and a lower main body. The upper cover is threadedly connected to seal an upper end of the middle main body; the upper cover and an upper part of the middle main body enclose to form the gas discharge chamber 1a; the lower main body is threadedly connected to a lower end of the middle main body; the lower main body and a lower part of the middle main body enclose to form the separation chamber 1b.

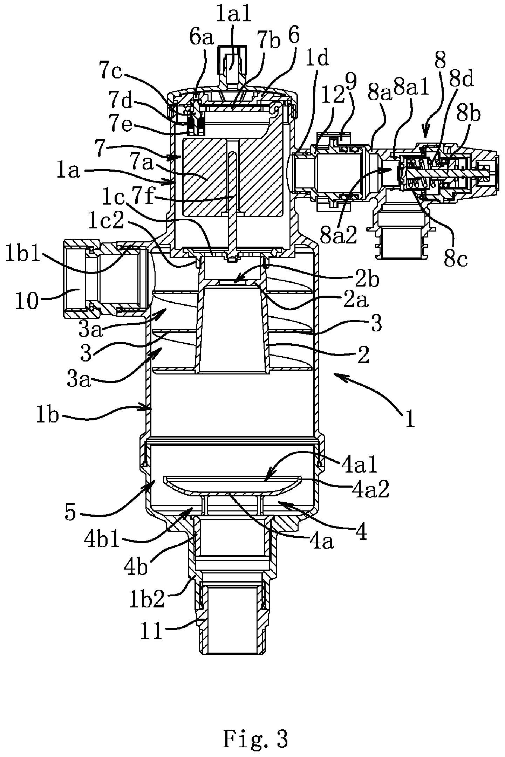

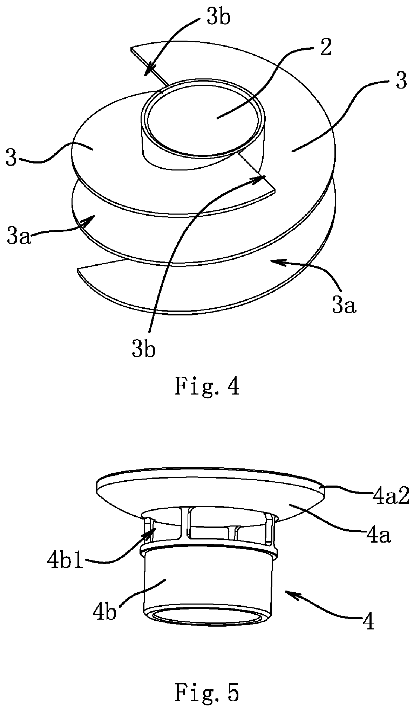

As shown in FIGS. 2 and 3, in the separation chamber 1b, there is a fixed central cylinder 2 oriented in an up-and-down direction. The central cylinder 2 has a conical shape with an upper part and a lower part, the upper part of the central cylinder 2 being smaller than the lower part of the central cylinder 2. A top-to-bottom gradually decreasing gap exists between an outer surface of the central cylinder 2 and the sidewall of the separation chamber 1b, while the central cylinder 2 has a bottom-to-top decreasing inner hole. The central cylinder 2 is arranged coaxially with the separation chamber 1b. The gas discharge chamber 1a and the separation chamber 1b are in communication through the central cylinder 2. On a lower surface of the partition 1c, adjacent to an outer side of the gas passage holes 1c1, there is a downward protruding connector ring 1c2. An upper end of the central cylinder 2 is fitted into and threadedly connected with the connector ring 1c2. A plurality of helical blades 3 are fixed between the housing 1 and the central cylinder 2 in a spiral arrangement along a up-and-down direction, and are spaced from one another to form a plurality of liquid passage channels 3a, with the number of the liquid passage channels 3a being equal to the number of the helical blades 3, outlets 3b of the liquid passage channels 3a are located outside at a lower end of the central cylinder 2 and are substantially evenly distributed along a circumference of the central cylinder 2. In this embodiment, outer side walls of the helical blades 3 are close to or slightly gapped from a side wall of the separation chamber 1b, while inner side walls of the helical blades 3 are fixed to the central cylinder 2. The helical blades 3 and the central cylinder 2 constitute a spiral component. In this embodiment, two helical blades 3 are depicted, but the number of the helical blades 3 can vary (three, four, five, six, or more) depending on a required flow rate. As depicted in FIG. 4, the helical blades 3 are evenly spaced helically, with their lower ends aligned at the same height; here, lower ends of all the helical blades 3 are flush with the lower end of the central cylinder 2. All upper ends of the helical blades 3 are aligned at the same height along the central cylinder 2, with a gap between the upper end of the helical blades 3 and the lower surface of the partition 1c, ensuring smooth entry of liquid into all liquid passage channels 3a. An inner surface of the upper part of the central cylinder 2 is provided with a protruding annular stop ring 2a, with a central hole 2b at the center of the stop ring 2a. The upper ends of the liquid passage channels 3a are open, ensuring that liquid flows through each of them.

As shown in FIGS. 2 and 3, the liquid outlet interface pipe 1b2 is located on a bottom wall of the separation chamber 1b and faces downward. Below the central cylinder 2, there is also a blocking member 4. Between the blocking member 4 and the side wall of separation chamber 1b, there exists a liquid passage gap 5, which is annular in shape. There is a spacing between the blocking member 4 and the central cylinder 2, creating a vortex space. An upper surface of the blocking member 4 is provided with a downwardly sunken concave cavity 4a1 that faces and aligns with the central cylinder 2. At an upper end of the blocking member 4, there is a baffle 4a that is roughly bowl-shaped or dish-shaped, with the concave cavity 4a1 being positioned on the baffle 4a. The concave cavity 4a1 has a flat bottom surface and an arc-shaped side surface. An upper edge of the baffle 4a has a straight cylindrical protruding ring 4a2, and the liquid passage gap 5 exists between the protruding ring 4a2 and the side wall of the separation chamber 1b. The position of the protruding ring 4a2 corresponds to the helical blades 3, and a maximum outer diameter of the protruding ring 4a2 is larger than a maximum outer diameter of the central cylinder 2. A lower surface of the blocking member 4 is provided with a connecting tube 4b capable of being inserted into the liquid outlet interface pipe 1b2, and an upper end of the connecting tube 4b extends out of the liquid outlet interface pipe 1b2 and has a through hole 4b1. As shown in FIG. 5, there are four through holes 4b1 uniformly and circumferentially distributed. The connecting tube 4b is inserted into the liquid outlet interface pipe 1b2 and forms a threaded connection.

As shown in FIG. 3, the top of the gas discharge chamber 1a is provided with a gas discharge hole 1a1. A gas guide plate 6 is fixed between the upper cover and the middle main body of the housing 1, and the gas guide plate 6 is provided with a vent hole 6a. The gas discharge component 7 comprises a float 7a, a lever 7b, a gas discharge core 7c, a gas discharge spring 7d, and a gas discharge seat 7e. The gas discharge seat 7e is fixed on the gas guide plate 6 and is positioned below the vent hole 6a. One end of the lever 7b is hinged on the gas discharge seat 7e, while the other end of the lever 7b is hooked to the float 7a, the float 7a being located inside the gas discharge chamber 1a. The gas discharge core 7c is installed in the gas discharge seat 7e, and an upper end of the gas discharge core 7c passes through the lever 7b and inserts into the vent hole 6a. The lever 7b is capable of acting on the gas discharge core 7c to make the gas discharge core 7c move downwardly. The gas discharge spring 7d is connected between the gas discharge core 7c and the gas discharge seat 7e, and the gas discharge spring 7d acts on the gas discharge core 7c to make the gas discharge core 7c close the vent hole 6a. On the partition 1c, there is a float guide rod 7f installed in an upward orientation, and the float 7a is sleeved onto the float guide rod 7f. During normal liquid supply, when liquid enters the gas discharge chamber 1a and lifts the float 7a, the lever 7b is not under load, and the gas discharge core 7c, under the action of the gas discharge spring 7d, closes the vent hole 6a. As gas accumulates in the gas discharge chamber 1a, causing the liquid level to drop continuously, the float 7a moves downward, causing the lever 7b to rotate, so that the lever 7b acts on the gas discharge core 7c, making the gas discharge core 7c overcome a spring force of the gas discharge spring 7d and move downwardly to open the vent hole 6a for gas discharge. After the gas is discharged, as the liquid level rises again in the gas discharge chamber 1a, the float 7a is again lifted, and the vent hole 6a is closed once again.

As shown in FIG. 3, the safety valve 8 comprises a valve body 8a and a valve spindle 8b. Inside the valve body 8a, there is a valve seat 8a1 with a valve hole 8a2 through which the inlet and outlet ends of the valve body 8a are in communication. The valve spindle 8b is connected to a membrane 8c and a safety spring 8d. An outer edge of the membrane 8c is fixed onto the valve body 8a, while a central area of the membrane 8c is fixed onto an inner end of the valve spindle 8b. The safety spring 8d acts on the valve spindle 8b to press the membrane 8c against the valve seat 8a1, thereby closing the valve hole 8a2. When a large amount of gas mixes into the liquid, increasing the pressure inside pipelines, the gas enters the gas discharge chamber 1a. While the gas discharge component 7 discharging the gas, the gas pushes the valve spindle 8b of the safety valve 8 outward, causing an inner end of the valve spindle 8b to move away from the valve seat 8a1, thereby opening the valve hole 8a2; as a result, the large amount of gas is discharged through the safety valve 8.

During operation of the present device, gas-containing liquid is introduced through the liquid inlet interface pipe 1b1 into the separation chamber 1b, and then the gas-containing liquid is divided into multiple streams by the helical blades 3 and spirals downward inside the liquid passage channels 3a; the multiple streams of liquid spiraling out from the outlets 3b of the liquid passage channels 3a merge back into a unified whole and enter a vortex space, where the unified whole liquid is in a vortex state with even circumferential forces, allowing gases to converge in a linear manner at the center of the vortex (that is, creating a linearly aligned rotational center of the vortex along the axial direction); the bottommost liquid enters the concave cavity 4a1 of the blocking member 4 for further gas separation, while the gas is prevented from entering the liquid inlet interface pipe 1b1 by the sidewall of the blocking member 4; the gas rises into an inner cavity of the central cylinder 2 and is converged by the central cylinder 2, causing the gas in form of bubbles to collide and form larger bubbles which can ascend rapidly into the gas discharge chamber 1a and finally discharged from the housing 1 through the gas discharge component 7, while the degassed liquid flows out from the liquid outlet interface pipe 1b2. The gas gathering in a straight line at the center of the vortex fully leverages the centrifugal force generated by the liquid's spiral motion, thereby enhancing the gas separation efficiency of the present separation device.

### Embodiment II

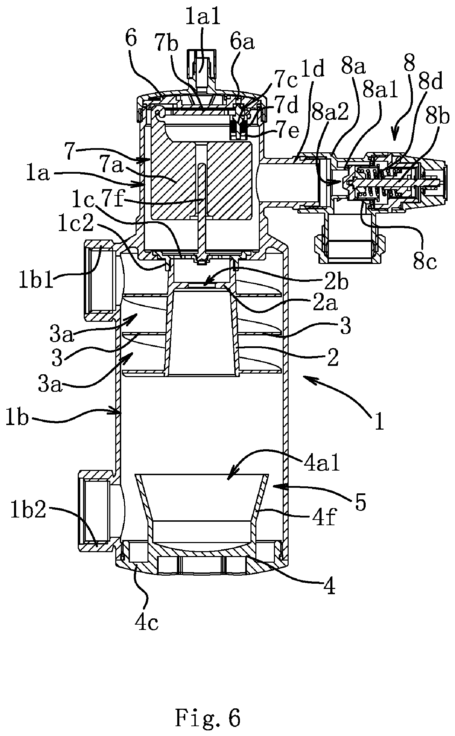

As shown in FIG. 6, the structure of the blocking member 4 and the connection of the safety valve 8 to the housing 1 differ from those in Embodiment I. Here, the liquid outlet interface pipe 1b2 is provided on the sidewall at the lower end of the separation chamber 1b. The housing 1 is constructed by connecting an upper cover, a middle main body, and a blocking member 4. The liquid inlet interface pipe 1b1 and the liquid outlet interface pipe 1b2 both are provided on the middle main body. The blocking member 4 is threadedly connected to a lower port of the middle main body. An upper surface of the blocking member 4 is provided with a downwardly sunken concave cavity 4a1 that faces and aligns with the central cylinder 2. The blocking member 4 has a blocking portion 4f that is bowl-shaped, with the concave cavity 4a1 being positioned on the blocking portion 4f. The concave cavity 4a1 has a concave spherical bottom surface. An upper edge of the blocking portion 4a is higher than a inner hole of the liquid outlet interface pipe 1b2, and an annular liquid passage gap 5 exists between the side wall of the blocking portion 4f and the sidewall of the separation chamber 1b. An upper part of the side wall of the blocking portion 4f is conical, while a lower part of the side wall of the blocking portion 4f is cylindrical, enhancing the blocking effect of the blocking portion 4f against gas. An outer side surface at a lower end of the blocking portion 4f has a fixed ring 4c, which is securely connected to the housing 1. The fixed ring 4c is inserted into and threadedly connected to the lower port of the middle main body. The safety interface pipe 1d on the sidewall of the gas discharge chamber 1a is directly connected to the inlet end of the safety valve 8. Other structures are identical to those in Embodiment I.

### Embodiment III

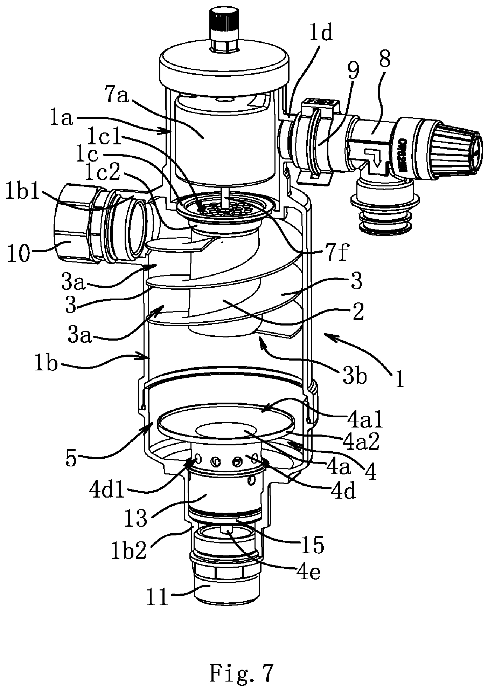

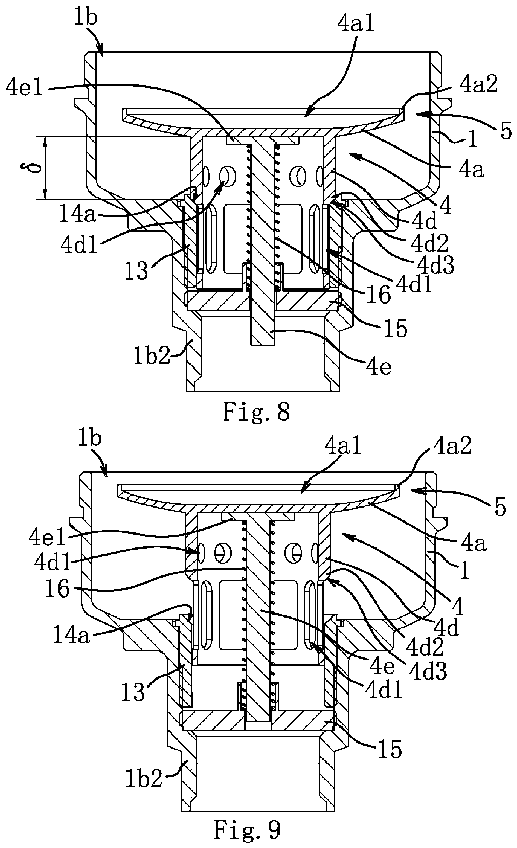

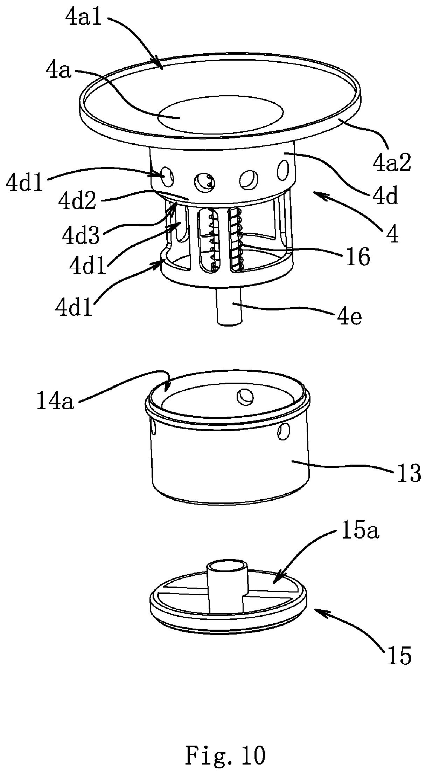

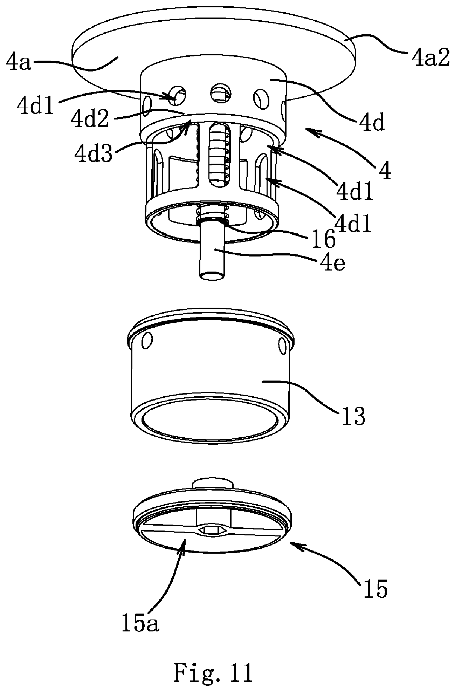

As shown in FIGS. 7 and 8, the blocking member 4 is capable of moving up and down, unlike in Embodiment I. Here, the lower surface of the blocking member 4 has a guide tube 4d which is inserted into and engaged with the liquid outlet interface pipe 1b2, with an upper end of the guide tube 4d extending out of the liquid outlet interface pipe 1b2. The guide tube 4d is provided with a plurality of liquid passage holes 4d1, and a limiting member 13 is provided on the liquid outlet interface pipe 1b2. When the guide tube 4d moves downward until it contacts the limiting member 13, a spacing distance δ exists between the lower surface of the baffle 4a and the bottom surface of the separation chamber 1b, and the separation chamber 1b and a inner hole of the liquid outlet interface pipe 1b2 remain in communication through the liquid passage holes 4d1 located above the limiting member 13. Referring to FIGS. 10 and 11, an outer side surface of the guide tube 4d is provided with a protruding shoulders 4d2; the limiting member 13 is fixed at an upper port of the liquid outlet interface pipe 1b2; the shoulder 4d2 is positioned directly above the limiting member 13, with liquid passage holes 4d1 located both above and below the shoulder 4d2 on the guide tube 4d. The limiting member 13 is a cylindrical liner, and the guide tube 4d is inserted into the liner, with an outer side surface of the guide tube 4d snugly abutting against an inner side surface of the liner. The liner is inserted into and threadedly connected to an inner hole at an upper end of the liquid outlet interface pipe 1b2, and the guide tube 4d is able to slide up and down within the liner. A lower surface of the shoulder 4d2 is an inverted cone-shaped abutment surface 4d3, the limiting member 13 has an inverted cone-shaped limiting surface 14a that corresponds to the abutment surface 4d3. The blocking member 4 further comprises a guide rod 4e fixed below the baffle 4a, with the guide tube 4d being located outside the guide rod 4e. The guide bracket 15 is fixed inside the liquid outlet interface pipe 1b2 and below the guide tube 4d. The guide bracket 15 is provided with liquid passage holes 15a. An upper end of the guide rod 4e is provided with a top plate 4e1 which is fixed to the baffle 4a, and the guide rod 4e is fitted into the guide bracket 15 and able to slide up-and-down. The spring 16 is sleeved onto the guide rod 4e and located inside the guide tube 4d, with two ends of the spring 16 abutting against the top plate 4e1 and the guide bracket 15 respectively. The other structures are identical to those in Embodiment I.

As shown in FIGS. 7 and 8, while the blocking member 4 moving downwardly, the baffle 4a, the guide tube 4d, and the guide rod 4e move downwardly together, whereas the guide bracket 15 and the liner remain stationary, compressing the spring 16 and generating an upward spring force on the blocking member 4. After the baffle 4a moves downwardly, a spacing distance δ is formed between the baffle 4a and the bottom of the housing 1, increasing the height of the vortex space. After the guide tube 4d moves downwardly, the abutment surface 4d3 on the shoulder 4d2 abuts against the limiting surface 14a of the limiting member 13, causing the liquid passage holes 4d1 located below the shoulder 4d2 to enter the liner and be blocked by the liner, while the liquid passage holes 4d1 located above the shoulder 4d2 remain exposed outside the liquid outlet interface pipe 1b2, thereby maintaining communication between the separation chamber 1b and the liquid outlet interface pipe 1b2 through the liquid passage holes 4d1 located above the shoulder 4d2, although with a reduced-yet not reaching zero-effective flow area of the liquid. During the downward movement of the blocking member 4, the effective flow area of the liquid passage holes 4d1 located above the bottom surface of the separation chamber 1b gradually decreases. As shown in FIG. 9, the blocking member 4 returns upward and reset due to the spring force of the spring 16, causing the baffle 4a, the guide tube 4d, and the guide rod 4e to move upward together. After the baffle 4a moves upward, a reset spacing distance is formed between the lower surface of baffle 4a and the bottom surface of the separation chamber 1b, and the reset spacing distance is greater than the spacing distance δ formed after the downward movement of the baffle 4a, meanwhile, the height of the vortex space is restored. After the guide tube 4d moves upward, the abutment surface 4d3 on the shoulder 4d2 separates from the limiting surface 14a of the limiting member 13, so that the liquid passage holes 4d1 moved below the shoulder 4d2 move upward and become exposed outside the liquid outlet interface pipe 1b2, while the liquid passage holes 4d1 located above the shoulder 4d2 remain exposed outside the liquid outlet interface pipe 1b2, thereby maintaining communication between the separation chamber 1b and the liquid outlet interface pipe 1b2 through the liquid passage holes 4d1 located both above and below the shoulder 4d2, and restoring the effective flow area for the liquid.

### Embodiment IV

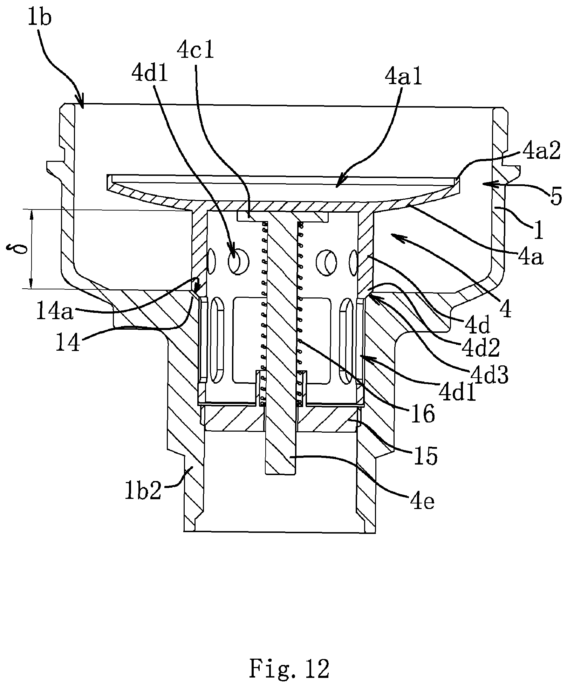

As shown in FIG. 12, the liquid outlet interface pipe 1b2 is provided with a limiting portion 14 which is located at an upper end port of the liquid outlet interface pipe 1b2 and has a limiting surface 14a. The other structures are identical to those in Embodiment III.

### Embodiment V

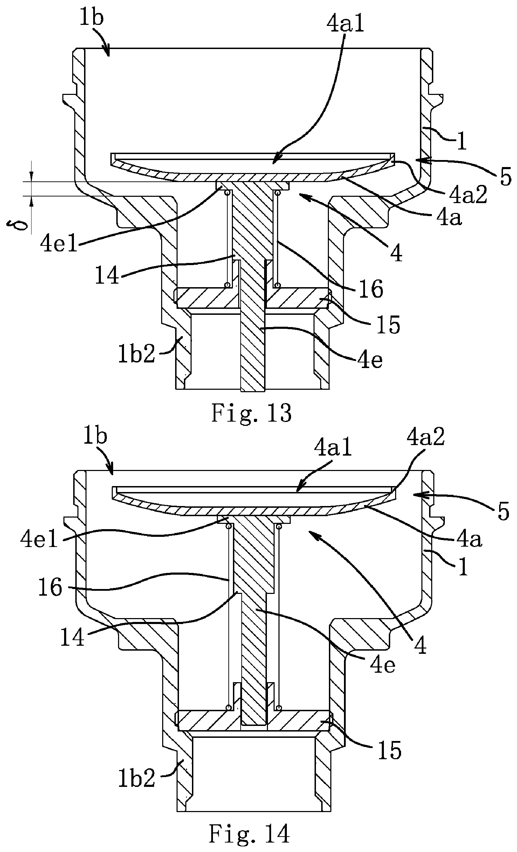

As shown in FIGS. 13 and 14, compared to Embodiment III, the blocking member 4 does not include a guide tube 4d, and there is no liner in the liquid outlet interface pipe 1b2. Here, the blocking member 4 comprises a baffle 4a and a guide rod 4e fixed below the baffle 4a. The guide bracket 15 is fixed inside the liquid outlet interface pipe 1b2, and the guide rod 4e is inserted into the guide bracket 15. The guide rod 4e has a limiting portion 14. An outer side surface of the guide rod 4e above the guide bracket 15 is provided with a shoulder which acts as the limiting portion 14. When the guide rod 4e moves downward to contact the guide bracket 15 at the limiting portion 14, a spacing distance δ is maintained between the lower surface of the baffle 4a and the bottom surface of separation chamber 1b. A spring 16 is positioned between the blocking member 4 and the liquid outlet interface pipe 1b2, and spring 16 is sleeved onto the guide rod 4e, with two ends of the spring 16 abutting against the blocking member 4 and the guide bracket 15 respectively. The other structures are identical to those in Embodiment III.

### Referenced parts

1, housing; 1a, gas discharge chamber; 1a1, gas discharge hole; 1b, separation chamber; 1b1, liquid inlet interface pipe; 1b2, liquid outlet interface pipe; 1c, partition; 1c1, gas passage hole; 1c2, connector ring; 1d, safety interface pipe; 2, central cylinder; 2a, stop ring; 2b, central hole; 3, spiral blade; 3a, liquid passage channel; 3b, outlet; 4, blocking member; 4a, baffle; 4a1, concave cavity; 4a2, protruding ring; 4b, connecting tube; 4b1, through hole; 4c, fixed ring; 4d, guide tube; 4d1, liquid passage hole; 4d2, shoulder; 4d3, abutment surface; 4e, guide rod; 4e1, top plate; 4f, blocking portion; 5, liquid passage gap; 6, gas guide plate; 6a, vent hole; 7, gas discharge component; 7a, float; 7b, lever; 7c, gas discharge core; 7d, gas discharge spring; 7e, gas discharge seat; 7f, float guide rod; 8, safety valve; 8a, valve body; 8a1, valve seat; 8a2, valve hole; 8b, valve spindle; 8c, membrane; 8d, safety spring; 9, snap ring; 10, liquid inlet fitting; 11, liquid outlet fitting; 12, safety fitting; 13, limiting member; 14, limiting portion; 14a, limiting surface; 15, guide bracket; 15a, liquid passage hole; 16, spring; δ, spacing distance.

## Claims

1. A device for separating gas from liquid, comprising: a housing (1); a gas discharge chamber (1a) provided with a gas discharge hole (1a1) and located at an upper portion of the housing (1); a separation chamber (1b) located at a lower portion of the housing (1); a gas discharge component (7) mounted on the gas discharge chamber (1a); a liquid inlet interface pipe (1b1) provided at an upper end of the separation chamber (1b); a liquid outlet interface pipe (1b2) provided at a lower end of the separation chamber (1b); a central cylinder (2) fixed in the separation chamber (1b); and a blocking member (4) located below the central cylinder (2), an annular liquid passage gap (5) located between the blocking member (4) and the separation chamber (1b), the separation chamber (1b) and the gas discharge chamber (1a) are in communication through the central cylinder (2); **characterized in that**, a plurality of helical blades (3) are fixed between the housing (1) and the central cylinder (2) in a spiral arrangement along a up-and-down direction, and are spaced from one another to form a plurality of liquid passage channels (3a) each having an outlet (3b), with the number of the liquid passage channels (3a) being equal to the number of the helical blades (3), each outlet (3b) of the liquid passage channels (3a) is located outside at a lower end of the central cylinder (2) and the outlets (3b) are substantially evenly distributed along a circumference of the central cylinder (2), an upper surface of the blocking member (4) is provided with a downwardly sunken concave cavity (4a1) that faces and aligns with the central cylinder (2), an upper end of the blocking member (4) has a baffle (4a) with the concave cavity (4a1); the central cylinder (2) has a conical shape with an upper part and a lower part, the upper part of the central cylinder (2) being smaller than the lower part of the central cylinder (2), while a side wall of the separation chamber (1b) is cylindrical.

2. The device for separating gas from liquid as claimed in claim 1, **characterized in that** an inner surface of the upper part of the central cylinder (2) is provided with a protruding annular stop ring (2a).

3. The device for separating gas from liquid as claimed in claim 1, **characterized in that** lower ends of all the helical blades (3) are flush with the lower end of the central cylinder (2).

4. The device for separating gas from liquid as claimed in any one of claims 1-3, **characterized in that** the liquid outlet interface pipe (1b2) is located on a bottom wall of the separation chamber (1b), the concave cavity (4a1) has a flat bottom surface, an arc-shaped side surface, and a cylindrical protruding ring (4a2) along a rim of an opening of the concave cavity (4a1), the liquid passage gap (5) exists between the protruding ring (4a2) and the side wall of the separation chamber (1b), a lower surface of the blocking member (4) is provided with a connecting tube (4b) capable of being inserted into the liquid outlet interface pipe (1b2), an upper end of the connecting tube (4b) extends out of the liquid outlet interface pipe (1b2) and has a through hole (4b1).

5. The device for separating gas from liquid as claimed in any one of claims 1-3, **characterized in that** the liquid outlet interface pipe (1b2) is located on the side wall at the lower end of the separation chamber (1b), the concave cavity (4a1) has a concave spherical bottom surface and a side surface that has a cylindrical lower section and a conical upper section, an upper edge of the blocking member (4) is above an inner hole of the liquid outlet interface pipe (1b2), the liquid passage gap (5) exists between the blocking member (4) and the side wall of the separation chamber (1b).

6. The device for separating gas from liquid as claimed in claim 5, **characterized in that** an outer side surface at a lower end of the blocking member (4) is provided with a fixed ring (4c) that is fixedly connected to the housing (1).

7. The device for separating gas from liquid as claimed in any one of claims 1-3, **characterized in that** outer side walls of the helical blades (3) are close to or slightly gapped from a cavity wall of the separation chamber (1b), while inner side walls of the helical blades (3) are fixed to the central cylinder (2).

8. The device for separating gas from liquid as claimed in any one of claims 1-3, **characterized in that** the liquid inlet interface pipe (1b1) corresponds to an upper end of the central cylinder (2) and is arranged along a radial direction of the central cylinder (2).

9. The device for separating gas from liquid as claimed in any one of claims 1-3, **characterized in that** a safety valve (8) is connected to a side wall of the gas discharge chamber (1a).

10. The device for separating gas from liquid as claimed in any one of claims 1-3, **characterized in that** the liquid outlet interface pipe (1b2) is located at a center of a bottom of the separation chamber (1b), the blocking member (4) comprises a baffle (4a) and a guide tube (4d) fixed below the baffle (4a), the guide tube (4d) is inserted into and engaged with the liquid outlet interface pipe (1b2), the guide tube (4d) has at least one liquid passage hole (4d1), the liquid outlet interface pipe (1b2) has a limiting portion (14) or is provided with a limiting member (13), when the guide tube (4d) moves downward to contact the limiting portion (14) or the limiting member (13), a spacing distance (δ) exists between a lower surface of the baffle (4a) and a bottom surface of the separation chamber (1b), and a passage area of the at least one liquid passage hole (4d1) above the bottom surface of the separation chamber (1b) gradually decreases as the guide tube (4d) moves down, a spring (16) is provided between the blocking member (4) and the liquid outlet interface pipe (1b2).

11. The device for separating gas from liquid as claimed in claim 10, **characterized in that** an outer side surface of the guide tube (4d) is provided with a shoulder (4d2), the limiting portion (14) is located at an upper port of the liquid outlet interface pipe (1b2), or the limiting member (13) is fixed at the upper port of the liquid outlet interface pipe (1b2), the shoulder (4d2) is directly above the limiting portion (14) or the limiting member (13), a plurality of the at least one liquid passage holes (4d1) are provided both above and below the shoulder (4d2) on the guide tube (4d).

12. The device for separating gas from liquid as claimed in claim 11, **characterized in that** a lower surface of the shoulder (4d2) is an inverted cone-shaped abutment surface (4d3), the limiting portion (14) or the limiting member (13) has an inverted cone-shaped limiting surface (14a) that corresponds to the abutment surface (4d3).

13. The device for separating gas from liquid as claimed in claim 10, **characterized in that** the blocking member (4) further comprises a guide rod (4e) fixed below the baffle (4a), the guide tube (4d) is located on an outer side of the guide rod (4e), a guide bracket (15) is fixed in the liquid outlet interface pipe (1b2) and located below the guide tube (4d), the guide rod (4e) is inserted into and engaged with the guide bracket (15), the spring (16) is sleeved onto the guide rod (4e) and is located inside the guide tube (4d), an upper end of the spring (16) abuts against the blocking member (4), a lower end of the spring (16) abuts against the guide bracket (15).

14. The device for separating gas from liquid as claimed in any one of claims 1-3, **characterized in that** the liquid outlet interface pipe (1b2) is located at a center of a bottom of the separation chamber (1b), the blocking member (4) comprises a baffle (4a) and a guide rod (4e) fixed below the baffle (4a), a guide bracket (15) is provided on the liquid outlet interface pipe (1b2), the guide rod (4e) is inserted into and engaged with the guide bracket (15), the guide rod (4e) has a limiting portion (14), when the guide rod (4e) moves downward until the limiting portion (14) contacts the guide bracket (15), a spacing distance (δ) exists between a lower surface of the baffle (4a) and a bottom surface of the separation chamber (1b), a spring (16) is sleeved onto the guide rod (4e), an upper end of the spring (16) abuts against the blocking member (4), a lower end of the spring (16) abuts against the guide bracket (15).

## Patentansprüche

1. Vorrichtung zum Abscheiden von Gas aus Flüssigkeit, umfassend: ein Gehäuse (1); eine Gasabführungskammer (1a), die mit einem Gasabführungsloch (1a1) versehen ist und sich an einem oberen Abschnitt des Gehäuses (1) befindet; eine Abscheidekammer (1b), die sich an einem unteren Abschnitt des Gehäuses (1) befindet; ein auf der Gasabführungskammer (1a) angebrachtes Gasabführungselement (7); ein Flüssigkeitseinlass-Anschlussrohr (1b1), das an einem oberen Ende der Abscheidekammer (1b) vorgesehen ist; ein Flüssigkeitsauslass-Anschlussrohr (1b2), das an einem unteren Ende der Abscheidekammer (1b) vorgesehen ist; einen in der Abscheidekammer (1b) fixierten Zentralzylinder (2); und ein unterhalb des Zentralzylinders (2) angeordnetes Blockierelement (4), einen ringförmigen Flüssigkeitsdurchlassspalt (5), der sich zwischen dem Blockierelement (4) und der Abscheidekammer (1b) befindet, wobei die Abscheidekammer (1b) und die Gasabführungskammer (1a) durch den Zentralzylinder (2) in Verbindung stehen; **dadurch gekennzeichnet, dass** eine Vielzahl von Spiralblättern (3) zwischen dem Gehäuse (1) und dem Zentralzylinder (2) in einer spiralförmigen Anordnung entlang einer Auf- und Abwärtsrichtung befestigt und voneinander beabstandet sind, um eine Vielzahl von Flüssigkeitsdurchlassskanälen (3a) zu bilden, die jeweils einen Auslass (3b) aufweisen, wobei die Anzahl der Flüssigkeitsdurchlassskanäle (3a) gleich der Anzahl der Spiralblätter (3) ist, wobei jeder Auslass (3b) der Flüssigkeitsdurchlassskanäle (3a) außenseitig an einem unteren Ende des Zentralzylinders (2) angeordnet ist und die Auslässe (3b) im Wesentlichen gleichmäßig entlang eines Umfangs des Zentralzylinders (2) verteilt sind, wobei eine obere Fläche des Blockierelements (4) mit einer nach unten vertieften konkaven Kavität (4a1) versehen ist, die dem Zentralzylinder (2) zugewandt und mit diesem ausgerichtet ist, wobei ein oberes Ende des Blockierelements (4) eine Prallplatte (4a) mit der konkaven Kavität (4a1) aufweist; wobei der Zentralzylinder (2) eine konische Form mit einem oberen Teil und einem unteren Teil aufweist, wobei der obere Teil des Zentralzylinders (2) kleiner als der untere Teil des Zentralzylinders (2) ist, während eine Seitenwand der Abscheidekammer (1b) zylindrisch ist.

2. Vorrichtung zum Abscheiden von Gas aus Flüssigkeit nach Anspruch 1, **dadurch gekennzeichnet, dass** eine Innenfläche des oberen Teils des Zentralzylinders (2) mit einem hervorstehenden ringförmigen Anschlagsring (2a) versehen ist.

3. Vorrichtung zum Abscheiden von Gas aus Flüssigkeit nach Anspruch 1, **dadurch gekennzeichnet, dass** die unteren Enden aller Spiralblätter (3) mit dem unteren Ende des Zentralzylinders (2) bündig sind.

4. Vorrichtung zum Abscheiden von Gas aus Flüssigkeit nach einem der Ansprüche 1 bis 3, **dadurch gekennzeichnet, dass** das Flüssigkeitsauslass-Anschlussrohr (1b2) auf einer Bodenwand der Abscheidekammer (1b) angeordnet ist, wobei die konkave Kavität (4a1) eine flache Bodenfläche, eine bogenförmige Seitenfläche und einen zylindrischen, hervorstehenden Ring (4a2) entlang eines Randes einer Öffnung der konkaven Kavität (4a1) aufweist, wobei der Flüssigkeitsdurchlassspalt (5) zwischen dem hervorstehenden Ring (4a2) und der Seitenwand der Abscheidekammer (1b) vorhanden ist, wobei eine untere Fläche des Blockierelements (4) mit einem Verbindungsrohr (4b) versehen ist, das in das Flüssigkeitsauslass-Anschlussrohr (1b2) einsetzbar ist, ein oberes Ende des Verbindungsrohrs (4b) aus dem Flüssigkeitsauslass-Anschlussrohr (1b2) herausragt und eine Durchgangsbohrung (4b1) aufweist.

5. Vorrichtung zum Abscheiden von Gas aus Flüssigkeit nach einem der Ansprüche 1 bis 3, **dadurch gekennzeichnet, dass** das Flüssigkeitsauslass-Anschlussrohr (1b2) an der Seitenwand am unteren Ende der Abscheidekammer (1b) angeordnet ist, wobei die konkave Kavität (4a1) eine konkave, sphärische Bodenfläche und eine Seitenfläche aufweist, die einen zylindrischen unteren Abschnitt und einen konischen oberen Abschnitt hat, wobei eine obere Kante des Blockierelements (4) sich oberhalb einer inneren Bohrung des Flüssigkeitsauslass-Anschlussrohrs (1b2) befindet und der Flüssigkeitsdurchlassspalt (5) zwischen dem Blockierelement (4) und der Seitenwand der Abscheidekammer (1b) vorhanden ist.

6. Vorrichtung zum Abscheiden von Gas aus Flüssigkeit nach Anspruch 5, **dadurch gekennzeichnet, dass** eine äußere Seitenfläche am unteren Ende des Blockierelements (4) mit einem Befestigungsring (4c) versehen ist, der fest mit dem Gehäuse (1) verbunden ist.

7. Vorrichtung zum Abscheiden von Gas aus Flüssigkeit nach einem der Ansprüche 1 bis 3, **dadurch gekennzeichnet, dass** die äußeren Seitenwände der Spiralblätter (3) an einer Hohlraumwand der Abscheidekammer (1b) anliegen oder von der Hohlraumwand geringfügig beabstandet sind, während die inneren Seitenwände der Spiralblätter (3) am Zentralzylinder (2) befestigt sind.

8. Vorrichtung zum Abscheiden von Gas aus Flüssigkeit nach einem der Ansprüche 1 bis 3, **dadurch gekennzeichnet, dass** das Flüssigkeitseinlass-Anschlussrohr (1b1) einem oberen Ende des Zentralzylinders (2) entspricht und entlang einer radialen Richtung des Zentralzylinders (2) angeordnet ist.

9. Vorrichtung zum Abscheiden von Gas aus Flüssigkeit nach einem der Ansprüche 1 bis 3, **dadurch gekennzeichnet, dass** ein Sicherheitsventil (8) mit einer Seitenwand der Gasabführungskammer (1a) verbunden ist.

10. Vorrichtung zum Abscheiden von Gas aus Flüssigkeit nach einem der Ansprüche 1 bis 3, **dadurch gekennzeichnet, dass** das Flüssigkeitsauslass-Anschlussrohr (1b2) in der Mitte eines Bodens der Abscheidekammer (1b) angeordnet ist, das Blockierelement (4) eine Prallplatte (4a) und ein Führungsrohr (4d) umfasst, das unter der Prallplatte (4a) befestigt ist, wobei das Führungsrohr (4d) in das Flüssigkeitsauslass-Anschlussrohr (1b2) eingesetzt und mit diesem in Eingriff steht, wobei das Führungsrohr (4d) mindestens eine Flüssigkeitsdurchlassbohrung (4d1) hat, wobei das Flüssigkeitsauslass-Anschlussrohr (1b2) einen Begrenzungsabschnitt (14) aufweist oder mit einem Begrenzungselement (13) versehen ist, wobei, wenn das Führungsrohr (4d) nach unten bewegt wird und den Begrenzungsabschnitt (14) oder das Begrenzungselement (13) kontaktiert, ein Spaltabstand (δ) zwischen einer unteren Fläche der Prallplatte (4a) und einer Bodenfläche der Abscheidekammer (1b) besteht und eine Durchgangsfläche der mindestens einen Flüssigkeitsdurchlassbohrung (4d1) über der Bodenfläche der Abscheidekammer (1b) sich mit der Abwärtsbewegung des Führungsrohrs (4d) allmählich verringert, und wobei zwischen dem Blockierelement (4) und dem Flüssigkeitsauslass-Anschlussrohr (1b2) eine Feder (16) vorgesehen ist.

11. Vorrichtung zum Abscheiden von Gas aus Flüssigkeit nach Anspruch 10, **dadurch gekennzeichnet, dass** eine Außenseitenfläche des Führungsrohrs (4d) mit einer Schulter (4d2) versehen ist, der Begrenzungsabschnitt (14) an einem oberen Anschluss des Flüssigkeitsauslass-Anschlussrohrs (1b2) angeordnet ist, oder das Begrenzungselement (13) am oberen Anschluss des Flüssigkeitsauslass-Anschlussrohrs (1b2) befestigt ist, die Schulter (4d2) sich direkt oberhalb des Begrenzungsabschnitts (14) oder des Begrenzungselements (13) befindet, und sowohl oberhalb als auch unterhalb der Schulter (4d2) am Führungsrohr (4d) mehrere der mindestens einen Flüssigkeitsdurchlassbohrungen (4d1) vorgesehen sind.

12. Vorrichtung zum Abscheiden von Gas aus Flüssigkeit nach Anspruch 11, **dadurch gekennzeichnet, dass** eine untere Fläche der Schulter (4d2) eine umgekehrt kegelförmige Anlagefläche (4d3) ist, wobei der Begrenzungsabschnitt (14) oder das Begrenzungselement (13) eine umgekehrt kegelförmige Begrenzungsfläche (14a) aufweist, die der Anlagefläche (4d3) entspricht.

13. Vorrichtung zum Abscheiden von Gas aus Flüssigkeit nach Anspruch 10, **dadurch gekennzeichnet, dass** das Blockierelement (4) ferner eine unterhalb der Prallplatte (4a) festgelegte Führungsstange (4e) umfasst, das Führungsrohr (4d) sich an einer Außenseite der Führungsstange (4e) befindet, eine Führungshalterung (15) im Flüssigkeitsauslass-Anschlussrohr (1b2) festgelegt und unterhalb des Führungsrohrs (4d) angeordnet ist, die Führungsstange (4e) in die Führungshalterung (15) eingesetzt ist und mit dieser im Eingriff steht, die Feder (16) auf die Führungsstange (4e) aufgesteckt und innerhalb des Führungsrohrs (4d) angeordnet ist, ein oberes Ende der Feder (16) am Blockierelement (4) anliegt und ein unteres Ende der Feder (16) an der Führungshalterung (15) anliegt.

14. Vorrichtung zum Abscheiden von Gas aus Flüssigkeit nach einem der Ansprüche 1 bis 3, **dadurch gekennzeichnet, dass** das Flüssigkeitsauslass-Anschlussrohr (1b2) in der Mitte eines Bodens der Abscheidekammer (1b) angeordnet ist, wobei das Blockierelement (4) eine Prallplatte (4a) und eine unterhalb der Prallplatte (4a) befestigte Führungsstange (4e) umfasst, auf dem Flüssigkeitsauslass-Anschlussrohr (1b2) eine Führungshalterung (15) vorgesehen ist, die Führungsstange (4e) in die Führungshalterung (15) eingesetzt ist und mit dieser im Eingriff steht, die Führungsstange (4e) einen Begrenzungsabschnitt (14) aufweist, wobei, wenn sich die Führungsstange (4e) nach unten bewegt, bis der Begrenzungsabschnitt (14) die Führungshalterung (15) kontaktiert, ein Spaltabstand (δ) zwischen einer unteren Fläche der Prallplatte (4a) und einer Bodenfläche der Abscheidekammer (1b) besteht, eine Feder (16) auf die Führungsstange (4e) aufgesteckt ist, ein oberes Ende der Feder (16) am Blockierelement (4) anliegt und ein unteres Ende der Feder (16) an der Führungshalterung (15) anliegt.

## Revendications

1. Dispositif de séparation gaz-liquide, comprenant : un logement (1) ; une chambre de décharge de gaz (1a) pourvue d'un trou de décharge de gaz (1a1) et située à une partie supérieure du logement (1) ; une chambre de séparation (1b) située à une partie inférieure du logement (1) ; un composant de décharge de gaz (7) monté sur la chambre de décharge de gaz (1a) ; un tuyau d'interface d'entrée de liquide (1b1) prévu à une extrémité supérieure de la chambre de séparation (1b) ; un tuyau d'interface de sortie de liquide (1b2) prévu à une extrémité inférieure de la chambre de séparation (1b) ; un cylindre central (2) fixé dans la chambre de séparation (1b) ; et un élément de blocage (4) situé sous le cylindre central (2), un espace de passage de liquide annulaire (5) situé entre l'élément de blocage (4) et la chambre de séparation (1b), la chambre de séparation (1b) et la chambre de décharge de gaz (1a) étant en communication par l'intermédiaire du cylindre central (2) ; **caractérisé en ce qu'**une pluralité de pales hélicoïdales (3) sont fixées entre le logement (1) et le cylindre central (2) selon une disposition en spirale dans une direction haute-basse, et sont espacées les unes des autres pour former une pluralité de canaux de passage de liquide (3a), chacun ayant une sortie (3b), le nombre de canaux de passage de liquide (3a) étant égal au nombre des pales hélicoïdales (3), chaque sortie (3b) des canaux de passage de liquide (3a) est située à l'extérieur à une extrémité inférieure du cylindre central (2) et les sorties (3b) sont sensiblement réparties de manière régulière le long d'une circonférence du cylindre central (2), une surface supérieure de l'élément de blocage (4) est pourvue d'une cavité concave enfoncée vers le bas (4a1) qui fait face et s'aligne avec le cylindre central (2), une extrémité supérieure de l'élément de blocage (4) comporte un déflecteur (4a) avec la cavité concave (4a1) ; le cylindre central (2) présente une forme conique avec une partie supérieure et une partie inférieure, la partie supérieure du cylindre central (2) étant plus petite que la partie inférieure du cylindre central (2), tandis qu'une paroi latérale de la chambre de séparation (1b) est cylindrique.

2. Dispositif de séparation gaz-liquide selon la revendication 1, **caractérisé en ce qu'**une surface interne de la partie supérieure du cylindre central (2) est pourvue d'un anneau d'arrêt annulaire saillant (2a).

3. Dispositif de séparation gaz-liquide selon la revendication 1, **caractérisé en ce que** des extrémités inférieures de toutes les pales hélicoïdales (3) affleurent par rapport à l'extrémité inférieure du cylindre central (2).

4. Dispositif de séparation gaz-liquide selon l'une quelconque des revendications 1 à 3, **caractérisé en ce que** le tuyau d'interface de sortie de liquide (1b2) est situé sur une paroi inférieure de la chambre de séparation (1b), la cavité concave (4a1) comporte une surface inférieure plate, une surface latérale en arc et un anneau saillant cylindrique (4a2) le long d'un rebord d'une ouverture de la cavité concave (4a1), l'espace de passage de liquide (5) existe entre l'anneau saillant (4a2) et la paroi latérale de la chambre de séparation (1b), une surface inférieure de l'élément de blocage (4) est pourvue d'un tube de connexion (4b) permettant d'être inséré dans le tuyau d'interface de sortie de liquide (1b2), une extrémité supérieure du tube de connexion (4b) s'étend jusqu'à l'extérieur du tuyau d'interface de sortie de liquide (1b2) et comporte un trou traversant (4b1).

5. Dispositif de séparation gaz-liquide selon l'une quelconque des revendications 1 à 3, **caractérisé en ce que** le tuyau d'interface de sortie de liquide (1b2) est situé sur la paroi latérale à l'extrémité inférieure de la chambre de séparation (1b), la cavité concave (4a1) comporte une surface inférieure sphérique concave et une surface latérale ayant une section inférieure cylindrique et une section supérieure conique, un bord supérieur de l'élément de blocage (4) est au-dessus d'un trou interne du tuyau d'interface de sortie de liquide (1b2), l'espace de passage de liquide (5) existe entre l'élément de blocage (4) et la paroi latérale de la chambre de séparation (1b).

6. Dispositif de séparation gaz-liquide selon la revendication 5, **caractérisé en ce qu'**une surface latérale externe à une extrémité inférieure de l'élément de blocage (4) est pourvue d'un anneau fixe (4c) qui est relié de manière fixe au logement (1).

7. Dispositif de séparation gaz-liquide selon l'une quelconque des revendications 1 à 3, **caractérisé en ce que** les parois latérales externes des pales hélicoïdales (3) sont proches ou légèrement espacées d'une paroi de cavité de la chambre de séparation (1b), tandis que des parois latérales internes des pales hélicoïdales (3) sont fixées au cylindre central (2).

8. Dispositif de séparation gaz-liquide selon l'une quelconque des revendications 1 à 3, **caractérisé en ce que** le tuyau d'interface d'entrée de liquide (1b1) correspond à une extrémité supérieure du cylindre central (2) et est disposé dans une direction radiale du cylindre central (2).

9. Dispositif de séparation gaz-liquide selon l'une quelconque des revendications 1 à 3, **caractérisé en ce qu'**une valve de sécurité (8) est connectée à une paroi latérale de la chambre de décharge de gaz (1a).

10. Dispositif de séparation gaz-liquide selon l'une quelconque des revendications 1 à 3, **caractérisé en ce que** le tuyau d'interface de sortie de liquide (1b2) est situé à un centre d'un fond de la chambre de séparation (1b), l'élément de blocage (4) comprend un déflecteur (4a) et un tube de guidage (4d) fixé sous le déflecteur (4a), le tube de guidage (4d) est inséré dans et engagé avec le tuyau d'interface de sortie de liquide (1b2), le tube de guidage (4d) comporte au moins un trou de passage de liquide (4d1), le tuyau d'interface de sortie de liquide (1b2) comporte une partie de limitation (14) ou est pourvu d'un élément de limitation (13) lorsque le tube de guidage (4d) se déplace vers le bas pour entrer en contact avec la partie de limitation (14) ou l'élément de limitation (13), une distance d'espacement (δ) existe entre une surface inférieure du déflecteur (4a) et une surface inférieure de la chambre de séparation (1b), et une aire de passage d'au moins l'un trou de passage de liquide (4d1) au-dessus de la surface inférieure de la chambre de séparation (1b) diminue progressivement lorsque le tube de guidage (4d) se déplace vers le bas, un ressort (16) est prévu entre l'élément de blocage (4) et le tuyau d'interface de sortie de liquide (1b2).

11. Dispositif de séparation gaz-liquide selon la revendication 10, **caractérisé en ce qu'**une surface latérale externe du tube de guidage (4d) est pourvue d'une épaule (4d2), la partie de limitation (14) est située à un orifice supérieur du tuyau d'interface de sortie de liquide (1b2), ou l'élément de limitation (13) est fixé à l'orifice supérieur du tuyau d'interface de sortie de liquide (1b2), l'épaule (4d2) est directement au-dessus de la partie de limitation (14) ou de l'élément de limitation (13), une pluralité d'au moins l'un trou de passage de liquide (4d1) est prévu à la fois au-dessus et sous l'épaule (4d2) sur le tube de guidage (4d).

12. Dispositif de séparation gaz-liquide selon la revendication 11, **caractérisé en ce qu'**une surface inférieure de l'épaule (4d2) est une surface d'appui (4d3) en forme de cône inversé, la partie de limitation (14) ou l'élément de limitation (13) comporte une surface de limitation (14a) en forme de cône inversé correspondant à la surface d'appui (4d3).

13. Dispositif de séparation gaz-liquide selon la revendication 10, **caractérisé en ce que** l'élément de blocage (4) comprend en outre une tige de guidage (4e) fixée sous le déflecteur (4a), le tube de guidage (4d) est situé sur un côté externe de la tige de guidage (4e), un support de guidage (15) est fixé dans le tuyau d'interface de sortie de liquide (1b2) et situé sous le tube de guidage (4d), la tige de guidage (4e) est insérée dans et engagée avec le support de guidage (15), le ressort (16) est manchonné sur la tige de guidage (4e) et situé à l'intérieur du tube de guidage (4d), une extrémité supérieure du ressort (16) s'appuie contre l'élément de blocage (4), et une extrémité inférieure du ressort (16) s'appuie contre le support de guidage (15).

14. Dispositif de séparation gaz-liquide selon l'une quelconque des revendications 1 à 3, **caractérisé en ce que** le tube d'interface de sortie de liquide (1b2) est situé au centre du fond de la chambre de séparation (1b), l'élément de blocage (4) comprend un déflecteur (4a) et une tige de guidage (4e) fixée sous le déflecteur (4a), un support de guidage (15) est prévu sur le tube d'interface de sortie de liquide (1b2), la tige de guidage (4e) est insérée dans et engagée avec le support de guidage (15), la tige de guidage (4e) comporte une partie de limitation (14), lorsque la tige de guidage (4e) se déplace vers le bas jusqu'à ce que la partie de limitation (14) entre en contact avec le support de guidage (15), une distance d'espacement (δ) existe entre une surface inférieure du déflecteur (4a) et une surface inférieure de la chambre de séparation (1b), un ressort (16) est manchonné sur la tige de guidage (4e), une extrémité supérieure du ressort (16) s'appuie contre l'élément de blocage (4), et une extrémité inférieure du ressort (16) s'appuie contre le support de guidage (15).
